# DEMANDE DE BREVET EUROPEEN

(11) **EP 0 800 249 A1**
(43) Date de publication de la demande: **08.10.1997**
(21) Numéro de dépôt: 97440024.4
(22) Date de dépôt: 12.03.1997
(51) Int. Cl.: H02G 3/00, F21V 23/06

(54) **Système d'équipement électrique modulaire et procédé de montage rapide**

(71) Demandeur: Lumia, 67720 Hoerdt (FR); ID Lumière, 68150 Ostheim (FR)
(72) Inventeur: Jannin, Bernard, 68000 Colmar (FR); Pimort, Alain, 67720 Hoerdt (FR)
(74) Mandataire: Littolff, Denis

(57) **Abrégé**

Système d'équipement électrique modulaire caractérisé en ce qu'il est composé d'éléments de base standards de section identique dont la mise bout à bout axialement permet de former un bandeau d'aspect linéaire se développant continûment le long d'une paroi, lesdits éléments standards étant :
- des éléments (E1, E'1, E2, E3) comportant des accessoires électriques pris parmi au moins un luminaire (2), et/ou au moins une prise (3), et/ou au moins un commutateur (1),
- un élément de jonction (E4) dépourvu d'équipements, mais assurant la continuité mécanique et électrique, de longueur adaptable,
l'un quelconque desdits éléments (E1, E'1, E2, E3, E4) de base du système étant connecté à une unique source d'alimentation électrique alimentant la totalité du bandeau continu formé par emboîtement mécanique axial desdits éléments (E1, E'1, E2, E3, E4), ledit emboîtement assurant simultanément la connexion électrique entre eux.

## Description

La présente invention concerne un système d'équipement électrique modulaire et son procédé de montage. Elle vise à permettre le montage/démontage rapide, facile et pratiquement sans outils d'un ensemble d'éléments dont l'assemblage permet de réaliser un bandeau continu comportant des équipements électriques divers, du type luminaires, prises, etc...

Il existe un nombre réduit d'éléments standards participant au système de l'invention, le choix des éléments pris pour une installation dépendant de paramètres variés tels que la longueur totale du bandeau à monter, les fonctionnalités désirées, etc...

Lorsque l'assemblage sur site est réalisé, le bandeau présente une uniformité esthétique qui lui permet de s'insérer aussi bien dans un local déjà meublé que d'être prévu dans la conception d'une nouvelle installation. Ce type de système a préférentiellement été conçu pour être installé dans des cuisines, qu'elles soient prééquipées ou non, et les éléments standards ont par conséquent des caractéristiques communes qui les rendent particulièrement adaptées pour être utilisées dans le cadre et pour les travaux quotidiens d'une cuisine.

Il existe déjà des réglettes électriques dotées d'accessoires du type luminaires et'ou prises et qui ont été conçues pour être installées dans des locaux tels que des cuisines ou des salles de bain, mais qui ne permettent pas d'aboutir à une couverture linéaire uniforme d'une paroi ou d'une portion de paroi, et dont les modalités de montage sont en général assez complexes.

Deux problèmes distincts se posent en effet pour l'installation d'éléments dotés des accessoires électriques nécessaires dans une cuisine :
- il faut pouvoir fixer mécaniquement lesdits éléments aux emplacements adéquats par rapport à la fonction qu'ils assurent ;
- à chaque emplacement, il faut qu'il y ait une connexion électrique avec une source d'alimentation électrique permettant non seulement d'assurer l'éclairagisme, mais encore de faire fonctionner les appareils usuellement connectés aux prises disponibles.

Dans les équipements de l'art antérieur, ces problèmes sont généralement traités de manière distincte, c'est à dire que chaque réglette est envisagée isolément, sous l'angle des liaisons mécaniques et souvent également du point de vue des connexions électriques.

Dans certains cas, seule la fonction luminaire est assurée, et les réglettes sont disposées à distance les unes des autres, reliées par des câbles disgracieux permettant la liaison électrique avec le secteur.

Dans d'autres cas, il existe des prises, mais elles sont séparées des éléments lumineux et reliées à une autre alimentation, ce qui double le nombre de connexions et ne facilite pas l'intégration des éléments dans les cuisines.

Dans d'autres cas enfin, un élément peut regrouper à la fois des lampes d'éclairage et des prises, mais rien n'est alors prévu pour assurer une quelconque liaison, tant électrique que mécanique, avec d'autres éléments similaires, qui pourraient former un ensemble cohérent et intégrable d'équipements électriques utiles dans une cuisine.

Tous ces systèmes ne disposent en outre d'aucune conception particulière pour faciliter ou favoriser leur montage, ou leur démontage en cas de problèmes toujours possibles. Enfin, ils ne procèdent d'aucune démarche intégrative, et se contentent de juxtaposer des éléments dont la connexion les uns aux autres n'est pas ou peu assurée, hormis la liaison électrique qui laisse visible un cordon allant d'élément en élément.

Le problème posé et résolu dans le cadre de la présente invention est de proposer un système complètement modulaire, basé sur des éléments standards réalisant les fonctions électriques utiles par exemple dans une cuisine, permettant de construire un bandeau linéaire continu et esthétique entre deux points quelconques d'un axe, chaque tronçon pouvant au surplus être facilement adapté à la tonalité fonctionnelle de la partie de cuisine dans laquelle il est installé.

A cet effet, le système d'équipement électrique modulaire de l'invention est caractérisé en ce qu'il est composé :
- d'éléments comportant des accessoires électriques pris parmi au moins un luminaire, et/ou au moins une prise, et/ou au moins un commutateur,
- un élément de jonction dépourvu d'équipements, mais assurant la continuité mécanique et électrique, de longueur adaptable,
l'un quelconque desdits éléments de base du système étant connecté à une unique source d'alimentation électrique alimentant la totalité du bandeau continu formé par emboîtement mécanique axial desdits éléments, ledit emboîtement assurant simultanément la connexion électrique entre eux.

Ce système prend donc en compte une double notion de connexion mécanique et électrique, la première permettant d'assurer la continuité esthétique du bandeau lorsqu'il est installé.

Un problème supplémentaire subsiste cependant, parce que ladite connexion mécanique doit pouvoir être réalisée simplement, au montage et au démontage, et pouvoir cependant coopérer avec le système de fixation à la paroi à laquelle est installé le bandeau, que cette paroi soit verticale, horizontale ou inclinée.

Le problème se situe d'ailleurs principalement au niveau de la fixation à ladite paroi, comme on le verra ultérieurement.

Concernant la connexion mécanique des éléments standards entre eux, le système est conçu de telle sorte que chaque élément comporte sur ses faces latérales respectivement la partie mâle et la partie femelle d'un système assurant simultanément l'emboîtage axial et la connexion électrique entre deux éléments contigus dont les faces latérales sont alors au contact l'une de l'autre, de manière à assurer la continuité des faces axiales, ledit système coopérant au surplus avec des moyens de fixation de chaque élément à la paroi, permettant d'une part le positionnement axial de l'élément libre par rapport au précédent déjà fixé, lequel est effectué avant l'emboîtement, et d'autre part le blocage de ladite fixation lorsque les faces latérales de deux éléments emboîtés sont au contact l'une de l'autre.

Pour faciliter la coopération entre la fixation de l'élément à la paroi et son emboîtement à l'élément précédemment fixé, il est de préférence prévu que ledit moyen de fixation à la paroi se présente sous la forme d'au moins une boutonnière pratiquée dans la face de l'élément en regard de la paroi, comportant des orifices répartis sur ladite face, chaque orifice ayant une zone circulaire dont le diamètre permet le passage de la tête d'une vis de fixation, et une zone axiale dans le prolongement d'un diamètre de la zone circulaire, parallèle à l'axe dudit élément, permettant le passage de la tige de vis, lesdites zones se succédant en sens inverse du sens de l'emboîtement.

Bien que de multiples formes soient possibles pour les éléments standards du système, l'une des formes préférentiellement choisies résulte de critères purement fonctionnels : de préférence, la section de chaque élément est d'allure triangulaire avec le sommet tronqué de sorte que deux des faces axiales générées par ladite section puissent être au contact de deux parois sécantes à l'intersection desquelles le bandeau est monté, tout en ménageant un espace entre ledit sommet tronqué et le coin formé par lesdites parois, par exemple pour le passage des fils électriques.

De préférence encore, ladite section triangulaire est isocèle et s'adapte à deux parois perpendiculaires, de sorte que la face de chaque élément portant les accessoires électriques est inclinée de 45° par rapport à la verticale.

Cet angle est particulièrement adapté pour l'éclairage des plans de travail et autres surfaces des cuisines au niveau desquels sont réalisés la plupart des travaux culinaires. Les surfaces des plans de travail ont en général une profondeur de 60 cm, alors que les éléments hauts des cuisines, auxquels le bandeau sera fixé dans le cas d'une cuisine équipée, sont environ 60 cm plus haut. L'angle précité permet aux accessoires d'éclairage de balayer optimalement la zone de travail.

Les équipements électriques utilisés sont principalement des luminaires et des prises, les premiers cités pouvant prendre plusieurs aspects pourvu qu'ils aient une luminance adaptée aux travaux culinaires.

Selon une possibilité, lesdits luminaires sont des ampoules halogènes fonctionnant en très basse tension, le transformateur convertissant la tension du secteur en très basse tension étant inclus dans chaque élément équipé desdites ampoules halogènes.

Selon une variante, les luminaires sont des tubes fluorescents à très basse puissance. Ces tubes fluorescents peuvent prendre différentes formes ou longueurs. Ils sont prévus pour avoir une durée de vie maximale, et ils fonctionnent à une puissance telle que les coûts de fonctionnement restent minimes.

Le boîtier de chaque élément est composé d'un profilé extrudé de préférence en aluminium, d'allure en V tronqué, formant les deux faces et le sommet tronqué du triangle sur lequel se clipse un autre profilé fermant le volume à section triangulaire, les deux faces latérales étant obstruées par des capots comportant respectivement la partie mâle et la partie femelle du système d'emboîtage mécanique et de connexion électrique.

Les éléments du système de l'invention sont de préférence prévus en trois longueurs multiples l'une de l'autre, permettant d'aboutir à une souplesse optimale dans la réalisation des bandeaux de longueur quelconque, par combinaison des éléments fonctionnellement adéquats de longueurs déterminées par leur agencement relatif dans la chaîne.

Le profilé fermant le volume triangulaire est également de préférence en aluminium extrudé. Dans le système de l'invention, c'est ce profilé qui comporte le cas échéant au moins un des accessoires électriques, sauf bien entendu dans le cas de l'élément de jonction, dont on donnera le mode d'utilisation ultérieurement.

Les éléments standards permettant la modularité du système sont dotés d'un interrupteur commandant les lumières, s'ils en sont dotés, et d'une ou plusieurs prises si l'élément est de longueur suffisante et si sa fonction le prévoit. Les éléments de base sur lesquels repose le système de l'invention comportent plusieurs combinaisons d'accessoires, ainsi que le montreront les exemples utilisés dans la suite du texte.

Lorsque les luminaires sont des tubes fluorescents, au moins une partie du profilé comportant les accessoires électriques est un cache en plastique translucide, également clipsé sur le profilé de base en V, en regard du tube fluorescent, qui est alors fixé audit profilé en V.

Dans tous les cas, le remplacement d'un luminaire défectueux est très aisé à réaliser puisqu'il suffit de déclipser ledit cache pour avoir accès au tube, alors que les lampes halogènes en très basse tension sont accessibles de l'extérieur de l'élément.

L'invention concerne également un procédé de montage rapide d'une rampe d'éléments d'un système d'équipement électrique modulaire tel qu'il vient d'être présenté, comportant les étapes suivantes :
- définition de l'axe de montage de ladite rampe ;
- définition des éléments à inclure dans ladite rampe ;
- calcul des points de fixation de chaque élément à installer en fonction de la position des moyens de fixation sur lesdits éléments ;
- fixation sur la paroi du premier élément ;
- établissement de la connexion électrique entre la source d'alimentation électrique et ledit élément ;
- accrochage sur l'axe défini, emboîtement à l'élément précédent et blocage des moyens de fixation pour chaque élément suivant à installer.

Le procédé de montage intègre les spécificités techniques précitées, notamment au niveau des moyens de fixation à une paroi, lesdits moyens étant des vis fixées à la paroi sur laquelle est installée la rampe, et coopérant avec des boutonnières prévues dans les éléments, permettant un accrochage préalable de l'élément, puis son déplacement axial pour l'emboîter et le connecter électriquement à l'élément le précédant déjà installé, puis le blocage par vissage dans cette position.

Plus précisément, chaque boutonnière située sur la face de chaque élément en contact avec la paroi à laquelle ce dernier doit être fixé présente un orifice ayant une zone circulaire permettant le passage d'une tête de vis pour l'accrochage préalable, et une zone axiale dans le prolongement d'un diamètre de ladite zone circulaire, parallèle à l'axe de l'élément et permettant le passage de la tige de vis pour ledit déplacement axial, lesdites zones se succédant en sens inverse du sens de l'emboîtement.

Un léger desserrage de vis permet d'effectuer l'opération inverse, et de démonter facilement un élément sans se poser de problème quant à la configuration électrique.

L'invention a donc été conçue pour offrir une grande souplesse de conception, à l'aide des éléments disponibles, réalisée très simplement par emboîtage des éléments retenus en vue de réaliser un bandeau continu équipé des accessoires requis aux emplacements prévus le long de son axe.

Ladite invention va à présent être décrite en référence aux dessins annexés, pour lesquels :
- La figure 1 est une vue en perspective d'un élément long doté simultanément de lampes et de prises ;
- La figure 2 est une vue en perspective d'un élément de longueur moyenne avec un éclairage fluorescent et une prise ;
- La figure 3 est une vue en perspective d'un élément court équipé de trois prises ;
- Les figures 4a et 4b montrent les extrémités mâle et femelle d'un quelconque élément de base du système.
- La figure 5 est une vue en plan des composants essentiels d'un élément ; et
- La figure 6 montre un bandeau constitué d'un certain nombre de ces éléments de base.

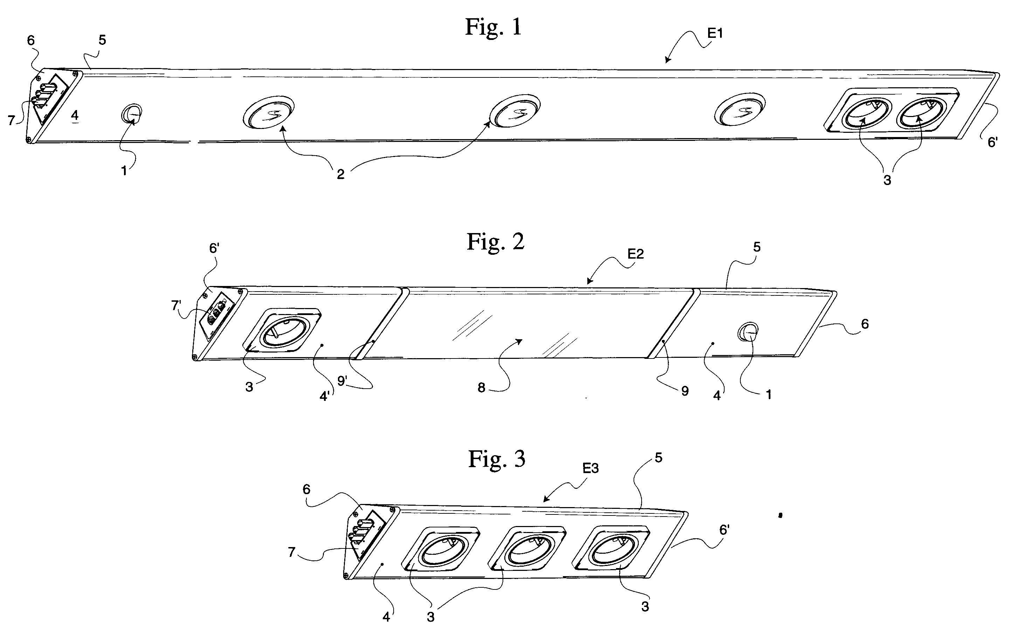

Les trois éléments de base apparaissant aux figures 1, 2 et 3 constituent trois exemples représentatifs des trois longueurs standards offertes par le système de l'invention, à savoir par exemple 0,9 m, 0,6 m et 0,3 m.

Selon la place disponible et les fonctionnalités requises, les équipements électriques sont soit plus ou moins nombreux, soit de tailles différentes. Les trois éléments représentés sont caractéristiques des trois familles principales d'accessoires : prises, luminaires de type fluorescents et luminaires de type lampes fonctionnant en très basse tension.

Ainsi, dans l'élément référencé (E1) de la figure 1, la succession d'équipements est la suivante : un commutateur (1) commandant des lampes (2) TBT, et deux prises (3). Ces équipements sont placés dans un profilé (4) d'allure plane clipsé dans un profilé (5) en V tronqué.

Deux capots formant les faces latérales (6, 6') d'extrémité ferment le volume d'aspect triangulaire ainsi créé par lesdits profilés (4, 5) clipsés. Lesdits capots latéraux (6, 6') comportent respectivement un organe de connexion mâle (7) et un organe de connexion femelle (7') (représentés en figures 2 et 3, alors que la partie mâle y est invisible).

Ces organes de connexion (7, 7') seront expliqués plus en détail en référence à une figure ultérieure, qui montre les pièces constitutives de chacun de ces éléments du bandeau apparaissant aux figures 1 à 3.

En figure 2, la partie centrale de l'élément (E2) comporte un cache (8) translucide clipsé sur le profilé en V tronqué au niveau d'un tube fluorescent (non apparent). Ce cache est très facilement démontable à l'aide de pièces (9, 9') formant la continuité entre ledit cache (8) et les deux tronçons latéraux du profilé plan (4, 4') équipés respectivement d'un interrupteur (1) et d'une prise (3). Les pièces (9, 9') se clipsent dans le profilé en V tronqué de la même manière que le cache (8) et que les profilés d'allure plane (4), ces éléments pouvant au surplus coulisser dans des gorges de clipsage (voir ci-après) pour améliorer leur démontabilité.

En effet, si le tube fluorescent tombe par exemple en panne, il suffit de déclipser l'une desdites pièces (9, 9') pour pouvoir insérer une lame de tournevis, couteau, coupe-papier, etc..., dans la fente résultant de son retrait. En agissant avec ladite lame à la manière d'un levier, le cache (8) peut être aisément extrait, et l'accès au tube fluorescent est immédiat.

L'élément de base (E3) représenté en figure 3 est d'une manière générale très similaire aux deux précédents, à ceci près qu'il ne comporte comme équipement que trois prises identiques. Un tel élément sera donc de préférence installé à un endroit de la cuisine où l'utilisation d'appareils électroménagers est fréquente : grille-pain, mixeur, batteur, etc...

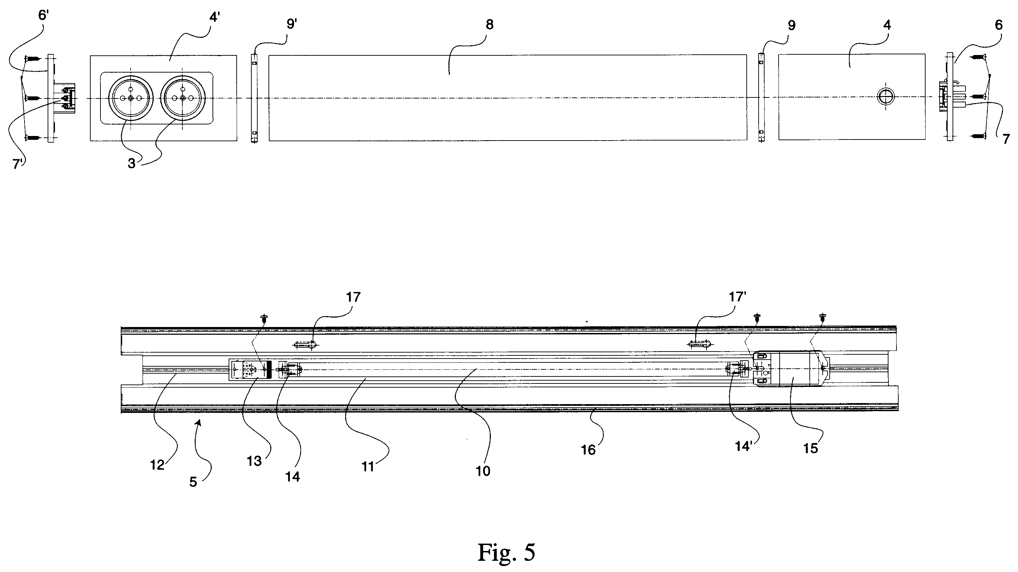

Le rôle du profilé en V tronqué est bien entendu fondamental, car il sert de logement aux équipements électriques proprement dits, et du fait que la fixation au mur est comme on le verra ultérieurement réalisée par son intermédiaire. Les supports de lampes, tubes, etc... sont fixés sur une réglette parallèle à la face tronquée du triangle, les fils électriques reliant d'une part les organes de connexion (7, 7'), et alimentant d'autre part les équipements de chacun des éléments passant entre ladite réglette et la face tronquée, comme cela sera visible en figure 5.

Dans l'invention, il n'y a donc nécessité que d'une source d'alimentation, connectée par exemple en bout du bandeau, et alimentant via une prise s adaptant aux organes (7, 7') la totalité dudit bandeau. On pourrait par exemple concevoir de tirer cette ligne jusqu'à l'extrémité (6) de l'élément (E1), auquel seraient ensuite emboîtés les éléments (E2) et (E3), par coopération à chaque fois entre deux organes de connexion (7, 7'), s'ajustant l'un dans l'autre de manière à réaliser simultanément l'emboîtage mécanique et la connexion électrique.

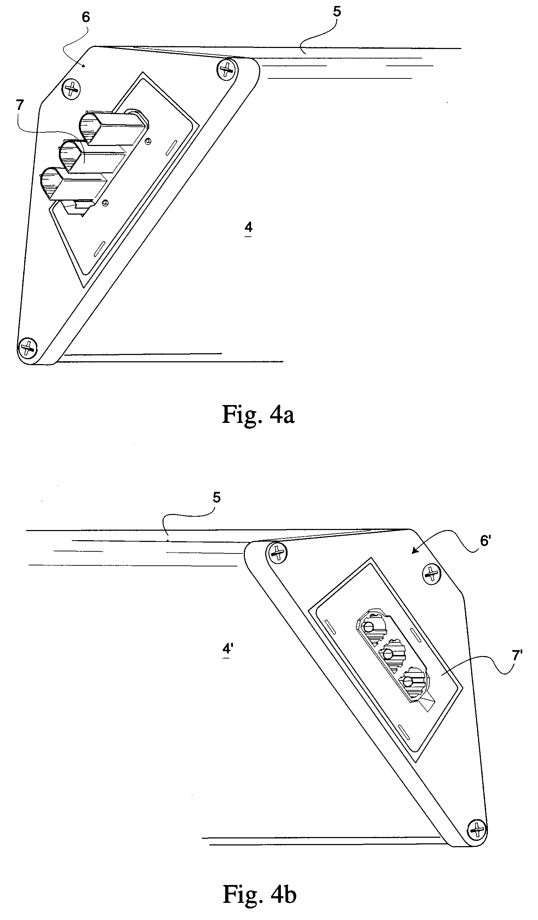

La double liaison est plus claire en référence aux figures 4a et 4b qui montrent en détail les capots (6, 6'), et par conséquent lesdits organes de connexion (7, 7') permettant de maintenir la direction axiale après emboîtage, et réalisant simultanément la continuité électrique.

Ces organes (7, 7') ne sont pas d'une seule pièce avec les capots (6, 6'), mais résultent d'un assemblage de pièces dont l'une est clipsée dans lesdits capots (6, 6').

La figure 5 montre les pièces essentielles constituant un élément de base de la même famille que celui apparaissant en figure 2, mais dans une configuration longue avec deux prises (3), un tube fluorescent long (10), et un interrupteur (1).

La partie basse du schéma montre le profilé principal (5) en V tronqué, alors que la partie haute représente les différentes pièces formant la base du volume triangulaire (profilés munis d'équipements (4, 4') ; cache (8) ; pièces de liaison (9, 9'), et les capots latéraux (6, 6') munis de leurs organes de connexion (7, 7')).

Ledit profité principal (5) comporte sur au moins une partie de sa longueur une réglette (11) parallèle à la face tronquée du sommet du triangle reposant sur une gorge (12) venant de fabrication avec le profilé (5) et permettant le passage des fils électriques (non représentés).

Sur cette réglette (11) sont fixés les organes nécessaires à faire fonctionner le tube (10) fluorescent : de gauche à droite sont représentés le starter (13), les deux supports (14, 14') d'extrémité dudit tube (10) et le ballast (15). Le câblage, non représenté, est traditionnel pour un tel tube (10).

Le profilé (15) comporte deux gorges latérales (16, 16') également d'une seule pièce avec ledit profilé. Elles permettent, du fait de leur forme, le clipsage et le coulissement du cache (8), des profilés plats (4, 4') et des pièces de liaison (9, 9'). Elles permettent également le vissage des capots (6, 6') à l'aide de vis conventionnelles s'ajustant dans lesdites gorges (16, 16'), ainsi que dans la gorge centrale (12).

Les boutonnières (17, 17') réalisent la fonction décrite plus haut : elles servent à fixer les éléments à la paroi choisie, en laissant un degré de liberté mécanique compatible avec le reste de la conception des éléments.

Dans le cas illustré, l'emboîtement se ferait de la gauche vers la droite, puisque la partie circulaire de l'orifice (17, 17') se trouve à droite. Les deux vis utilisées sont partiellement vissées dans le mur, à distance égale à celle qui sépare lesdits orifices circulaires. La tête de vis est insérée dans ces derniers, de manière à se retrouver à l'intérieur du volume, à mesure que la paroi du profité (5) se plaque contre le mur. Pour réaliser la double connexion électrique et mécanique avec l'élément précédemment installé, il suffit d'insérer l'organe mâle (7) axialement dans l'organe femelle (7'), le corps des vis pénétrant au cours du mouvement relatif dans les zones axiales des orifices (17, 17'). Il n'y a alors plus qu'à achever le vissage, pour que le nouvel élément soit à son tour bloqué contre la paroi auquel il est fixé.

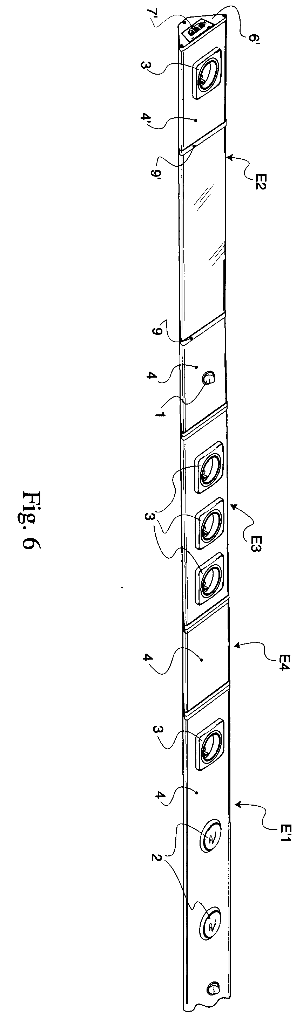

Lorsque toutes ces pièces sont montées, au contact l'une de l'autre, avec parfois un chevauchement (les pièces (9, 9') chevauchent le cache (8) et les profilés plats (4, 4') ; les capots (6, 6') chevauchent lesdits profilés (4, 4') au moins sur un des côtés du triangle), l'unité esthétique du produit est réalisée, et elle est maintenue lorsque plusieurs éléments de base sont emboîtés les uns aux autres, comme c'est te cas dans la figure 6.

Dans cette figure, on a réalisé un bandeau fonctionnel utilisant un élément (E2) de la figure 2, un élément (E3) de la figure 3, un élément de jonction (E4) et un élément (E'1) du type (E1) de la figure 1, mais avec deux lampes (2) fonctionnant en très basse tension.

L'élément (E4) a une longueur standard (par exemple la petite longueur de 30 cm), et peut être tronçonné à la longueur voulue par sciage perpendiculaire à l'axe du bandeau. Lorsque tel est le cas, une extrémité se retrouve sans capot : il suffit alors de le dévisser de la partie devenue inutile, et de le revisser à l'aide des mêmes trois vis s'insérant dans les gorges (12, 16, 16') courant tout au long des profilés (4, 5). L'alternance organe de connexion mâle (7) / organe de connexion femelle (7') est au surplus maintenue. Sur la figure, on a représenté un élément (E4) raccourci.

Le système de l'invention permet donc d'obtenir un bandeau extrêmement esthétique, facile à monter et à démonter, et connecté à une unique source d'alimentation électrique. L'utilisateur n'a donc pas à effectuer un câblage compliqué.

## Revendications

1. Système d'équipement électrique modulaire caractérisé en ce qu'il est composé d'éléments de base standards de section identique dont la mise bout à bout axialement permet de former un bandeau d'aspect linéaire se développant continûment le long d'une paroi, lesdits éléments standards étant :
- des éléments (E1, E'1, E2, E3) comportant des accessoires électriques pris parmi au moins un luminaire (2), et/ou au moins une prise (3), et/ou au moins un commutateur (1),
- un élément de jonction (E4) dépourvu d'équipements, mais assurant la continuité mécanique et électrique, de longueur adaptable,
l'un quelconque desdits éléments (E1, E'1, E2, E3, E4) de base du système étant connecté à une unique source d'alimentation électrique alimentant la totalité du bandeau continu formé par emboîtement mécanique axial desdits éléments (E1, E'1, E2, E3, E4), ledit emboîtement assurant simultanément la connexion électrique entre eux.

2. Système d'équipement électrique modulaire selon la revendication 1, caractérisé en ce que chaque élément (E1, E'1, E2, E3, E4) comporte sur ses faces latérales respectivement la partie mâle (7) et la partie femelle (7') d'un système assurant simultanément l'emboîtage axial et la connexion électrique entre deux éléments contigus dont tes faces latérales (6, 6') sont alors au contact l'une de l'autre, de manière à assurer la continuité des faces axiales (4, 4'), ledit système coopérant au surplus avec des moyens de fixation (17, 17') de chaque élément à la paroi, permettant d'une part le positionnement axial de l'élément libre par rapport au précédent déjà fixé, lequel est effectué avant l'emboîtement, et d'autre part le blocage de ladite fixation lorsque les faces latérales (6, 6') de deux éléments emboîtés sont au contact l'une de l'autre.

3. Système d'équipement électrique modulaire selon la revendication 2, caractérisé en ce que ledit moyen de fixation à la paroi se présente sous la forme d'au moins une boutonnière (17, 17') pratiquée dans ta face (5) de l'élément (E1, E'1, E2, E3, E4) en regard de la paroi, comportant des orifices répartis sur ladite face (5), chaque orifice (17, 17') ayant une zone circulaire dont le diamètre permet le passage de la tête d'une vis de fixation, et une zone axiale dans le prolongement d'un diamètre de la zone circulaire, parallèle à l'axe dudit élément (E1, E'1, E2, E3, E4), permettant le passage de la tige de vis, lesdites zones se succédant en sens inverse du sens de l'emboîtement.

4. Système d'équipement électrique modulaire selon l'une quelconque des revendications précédentes, caractérisé en ce que la section de chaque élément est d'allure triangulaire avec le sommet tronqué de sorte que deux des faces axiales (5) générées par ladite section puissent être au contact de deux parois sécantes à l'intersection desquelles le bandeau est monté tout en ménageant un espace entre ledit sommet tronqué et te coin formé par lesdites parois, par exemple pour le passage des fils électriques.

5. Système d'équipement électrique modulaire selon la revendication précédente, caractérisé en ce que ladite section triangulaire est isocèle et s'adapte à deux parois perpendiculaires, de sorte que la face (4, 4') de chaque élément portant les accessoires (1, 2, 3) électriques soit inclinée de 45° par rapport à la verticale.

6. Système d'équipement électrique modulaire selon l'une quelconque des revendications précédentes, caractérisé en ce que les luminaires (2) sont des ampoules halogènes fonctionnant en très basse tension, le transformateur convertissant la tension du secteur en très basse tension étant inclus dans chaque élément (E1, E'1) équipé desdites ampoules halogènes (2).

7. Système d'équipement électrique modulaire selon l'une quelconque des revendications 1 à 5, caractérisé en ce que les luminaires sont des tubes fluorescents (10) à très basse puissance.

8. Système d'équipement électrique modulaire selon l'une quelconque des revendications 1 à 7, caractérisé en ce que le boîtier de chaque élément est composé d'un profilé extrudé (5) en aluminium, d'allure en V, formant les deux faces et le sommet tronqué du triangle, sur lequel se clipse un autre profilé (4) fermant le volume à section triangulaire, les deux faces latérales étant obstruées par des capots (6, 6') comportant respectivement l'organe de connexion mâle (7) et l'organe de connexion femelle (7') du système d'emboîtage mécanique et de connexion électrique.

9. Système d'équipement électrique modulaire selon la revendication 8, caractérisé en ce que le profilé (4, 4') fermant le volume triangulaire est en aluminium extrudé.

10. Système d'équipement électrique modulaire selon la revendication précédente, caractérisé en ce que ledit profilé (4, 4') fermant le volume triangulaire comporte au moins un des accessoires électriques (1, 2, 3).

11. Système d'équipement électrique modulaire selon la revendication 8, caractérisé en ce que le profilé fermant le volume triangulaire est un cache (8) plastique translucide, et est clipsé en regard d'un tube fluorescent (10), lui-même fixé à l'autre profilé d'allure en V formant le boîtier de chaque élément.

12. Procédé de montage rapide d'une rampe d'éléments du système d'équipement électrique modulaire selon l'une quelconque des revendications précédentes, caractérisé en ce qu'il comprend les étapes suivantes :
- définition de l'axe de montage de ladite rampe ;
- définition des éléments de base (E1, E'1, E2, E3, E4) du système à inclure dans ladite rampe ;
- calcul des points de fixation de chaque élément (E1, E'1, E2, E3, E4) à installer ;
- fixation sur la paroi du premier élément ;
- établissement de la connexion électrique entre la source d'alimentation électrique et ledit élément ;
- accrochage sur l'axe défini, emboîtement à l'élément précédent et blocage des moyens de fixation pour chaque élément suivant à installer.

13. Procédé de montage rapide selon la revendication précédente, caractérisé en ce que les moyens de fixation sont des vis fixées à la paroi sur laquelle est installée la rampe, et coopérant avec des boutonnières (17, 17') prévues dans les éléments (E1, E'1, E2, E3, E4), permettant un accrochage préalable de l'élément, puis son déplacement axial pour l'emboîter et le connecter électriquement à l'élément le précédant déjà installé, puis le blocage par vissage dans cette position.

14. Procédé de montage rapide selon la revendication précédente, caractérisé en ce que chaque boutonnière (17, 17') située sur la face de chaque élément (E1, E'1, E2, E3, E4) en contact avec la paroi à laquelle ce dernier doit être fixé présente un orifice ayant une zone circulaire permettant le passage d'une tête de vis pour l'accrochage préalable, et une zone axiale dans le prolongement d'un diamètre de ladite zone circulaire, parallèle à l'axe de l'élément (E1, E'1, E2, E3, E4) et permettant le passage de la tige de vis pour ledit déplacement axial, lesdites zones se succédant en sens inverse du sens de l'emboîtement.
